# EUROPÄISCHE PATENTSCHRIFT

(11) **EP 3 524 873 B1**
(45) Veröffentlichungstag und Bekanntmachung des Hinweises auf die Patenterteilung: **11.11.2020**
(21) Anmeldenummer: 19152459.4
(22) Anmeldetag: 18.01.2019
(51) Int. Cl.: F21S 41/147, F21S 41/265, F21S 41/32, F21S 41/43, F21W 102/155, G02B 3/00, G02B 5/00, G02B 19/00

(54) **EFFIZIENTES, MIKROPROJEKTOREN AUFWEISENDES PROJEKTIONSLICHTMODUL FÜR EINEN KRAFTFAHRZEUGSCHEINWERFER**
EFFICIENT PROJECTION LIGHT MODULE COMPRISING MICROPROJECTORS FOR A MOTOR VEHICLE HEADLAMP
MODULE LUMINEUX DE PROJECTION EFFICACE COMPORTANT DES MICROPROJECTEURS POUR UN PHARE DE VÉHICULE AUTOMOBILE

(30) Priorität: 30.01.2018 DE 102018101991
(43) Veröffentlichungstag der Anmeldung: 14.08.2019
(73) Patentinhaber: Automotive Lighting Reutlingen GmbH, 72762 Reutlingen (DE)
(72) Erfinder: Licht, Martin, 72762 Reutlingen (DE); Buchberger, Christian, 72770 Reutlingen (DE)
(74) Vertreter: DREISS Patentanwälte PartG mbB

(56) Entgegenhaltungen:
- WO-A1-2017/066818
- CN-A- 104 100 909
- CN-A- 105 135 321
- CN-A- 105 180 058
- JP-A- 2015 115 165
- KR-A- 20180 078 951

## Beschreibung

Die vorliegende Erfindung betrifft ein Projektionslichtmodul für einen Kraftfahrzeugscheinwerfer nach dem Oberbegriff des Anspruchs 1. Ein solches Projektionslichtmodul ist aus der WO 2015/058227 A1 bekannt.

Das bekannte Projektionslichtmodul weist eine Licht der Lichtquelle sammelnde Primäroptik und eine Mehrzahl von Mikroprojektoren auf, von denen jeder jeweils eine Eingangslinse, eine Ausgangslinse und eine zwischen der Eingangslinse und der Ausgangslinse angeordnete Mikroblende aufweist, wobei die Eingangslinse dazu eingerichtet ist, von der Primäroptik her einfallendes Licht der Lichtquelle in einen zwischen der Eingangslinse und der Ausgangslinse liegenden Fokalbereich zu bündeln und wobei die Ausgangslinse in von dem Fokalbereich ausgehenden Licht der Lichtquelle angeordnet ist.

Konventionelle Projektionsmodule für Kraftfahrzeugscheinwerfer weisen eine Optik-Gesamtbautiefe in der Größenordnung von 75 mm bis über 120 mm auf. Unter diese Kategorie fallen Halogen- und Xenon-Scheinwerfer. Lichtquellen beider Kategorien werden im Betrieb mehrere Hundert Grad heiß. In ihrer Nähe stellen sich Temperaturen ein, die mit dem Einsatz feinstrukturierter Kunststoff-Optiken nicht kompatibel sind.

Erst in den letzten 10 bis 15 Jahren wurde es durch den Einsatz kälterer Lichtquellen, wie z.B. LEDs oder LaserDioden, die eine Betriebstemperatur von maximal 150°C vertragen können, möglich, Kunststoff-Optiken in der Nähe der Lichtquelle zu verwenden. Das machte die Entwicklung komplexerer optischer Ansätze möglich, wie z.B. Voll-LED und/oder Matrix-LED-Scheinwerfer. Solche Ansätze wurden am Anfang ihrer Entwicklung durch diskret aufgebaute Lichtquellenmodule geprägt. Ein Matrix-Scheinwerfer mit einer strukturierten Silikonoptik und einer abbildenden Optik ist aus der DE 10 2009 053 581 A1 bekannt.

Mit diesen Ansätzen konnten nicht alle Möglichkeiten der Miniaturisierung ausgeschöpft werden, da zur Formung von Matrix-Lichtverteilungen noch vergleichsweise große Primäroptiken und einzelne große Ein-Strahlengang-Projektionsoptiken zum Einsatz kamen. Die Größe der Primäroptiken ist aus Herstellungsgründen nach unten beschränkt. Die sehr komplexen Lichtleiter-basierten Primäroptiken werden in einem Kunststoffspritzvorgang hergestellt, der entsprechend feine Formkavitäten erfordert. Bei komplexen Silikonlichtleitern wird die Verkleinerung zunehmend aufwändig und letztendlich beliebig teuer. Solche Scheinwerfermodule besitzen eine Optik-Bautiefe, die ebenfalls in der Größenordnung von 75 mm bis über 120 mm liegt
Es ist eine generelle Tendenz, dass der für Kraftfahrzeugscheinwerfer zur Verfügung stehende Bauraum in immer komplexer werdenden Kraftfahrzeugen immer knapper wird. Daraus ergeben sich Forderungen nach einer Miniaturisierung von Kraftfahrzeugscheinwerfern. Es haben sich verschiedene Lösungsansätze ergeben. In einem Lösungsansatz wird die Idee eines Dia- bzw. Kinoprojektors aufgegriffen. Die Lichtverteilung wird durch eine Maske in der Brennfläche eines geeigneten Projektionsobjektivs generiert. Das kann zum Beispiel ein Filter (Dia, LCD) sein, welches angeleuchtet wird und eine Lichtverteilung generiert, die über ein Projektionsobjektiv abgebildet wird. Entsprechend kann auch eine feinstrukturierte, auf Pixelebene steuerbare integrierte LED-Lichtquelle über ein Projektionsobjektiv abgebildet werden, so dass ihre feinstrukturiert veränderbare Lichtquellenverteilung auf die Fahrbahn projiziert wird.

In all diesen Fällen wird jeweils ein abbildendes Objektiv (Sekundäroptik) verwendet. Eine Verkleinerung des Objektivs und insbesondere seiner den Bauraumbedarf, bzw. die Einbautiefe mitbestimmenden Brennweite würde voraussetzen, dass die LED-Arrays entsprechend verkleinert werden können (eine Verkürzung der Brennweite geht bei gleichbleibender Bildgröße, also bei gleichbleibender Größe der Lichtverteilung auf der Straße, mit einer Verkleinerung der Gegenstandsgröße, also der Größe der lichtemittierenden Fläche innerhalb des Scheinwerfers einher.) Einer Verkleinerung der lichtemittierenden Fläche sind zurzeit technische Grenzen gesetzt, so dass die Verkleinerung solcher Scheinwerfer mit nur einem optischen Strahlengang nicht ausreichend vorangetrieben werden kann. Als Folge ist auch die Bautiefe solcher Scheinwerfer nach unten auf Werte zwischen etwa 60 mm und bis über 100 mm beschränkt.

Weitere Lösungsansätze sehen vor, nicht die Primäroptik, sondern die abbildende Sekundäroptik zu strukturieren. Derartige Ansätze werden in der EP 999 407 und der WO2015/058227 A1 verfolgt. Beim Gegenstand der WO2015/058227 A1 kollimiert die Primäroptik eine weitwinklige Quellen-Lichtverteilung. Diese Lichtbündel durchlaufen parallel oder nahezu parallel zueinander orientierte Mikroprojektoren, von denen jeder jeweils eine Eingangslinse, eine Ausgangslinse und eine zwischen der Eingangslinse und der Ausgangslinse angeordnete Mikroblende aufweist.

Bei der WO2015/058227A1 übernehmen die Eingangslinsen die Aufteilung des aus der Primäroptik austretenden breiten Lichtbündels. Je ein aus einer Eingangslinse austretendes Lichtbündel beleuchtet eine zwischen der Eingangslinse und der Ausgangslinse angeordnete Mikroblende. Die Mikroblende ist üblicherweise eine Absorberplatte die das sie beleuchtende Lichtbündel durch absorbierende Abschattung beschneidet. Die Wandstärke der Mikroblenden beträgt zum Beispiel 0,1 mm. Die aus der Abschattung zwischen Mikroblende und Ausgangslinse resultierende Lichtverteilung wird von der Ausgangslinse in das Vorfeld des Scheinwerfermoduls projiziert.

Jede der sich zwischen jeweils einer Mikroblende und jeweils einer Ausgangslinse resultierenden Lichtverteilungen ist so klein, dass unter Beibehaltung der Größe ihrer Abbildung in das Vorfeld, d.h. mit einer Änderung des Abbildungsmaßstabes, eine signifikante Verkürzung der Brennweite und damit der Bautiefe solcher Mikroprojektoren erreicht werden kann. Es handelt sich um eine Verkürzung um den Faktor von ca. 1/3 bis 1/8 im Vergleich zu einem konventionellen Projektor. Maßgeblich für die Verkleinerung sind die Größe der Lichtquelle und ihre Leuchtdichte. Die projizierten Lichtverteilungen der Mikroprojektoren überlagern sich in dem Vorfeld zu einer Gesamtlichtverteilung des Scheinwerfermoduls. Die Zahl der Mikroprojektoren beträgt dabei zum Beispiel zwischen 30 und 40. Die Mikroblenden sind zum Beispiel als von Kanten begrenzte Durchbrüche in einer Folie realisiert.

Aus WO2017/066818 A1 ist ein Mikroprojektions-Lichtmodul für einen Kraftfahrzeugscheinwerfer bekannt.

Ausgehend von der der WO2015/058227 A1, die bereits die Forderung zur Bauraumreduktion erfüllt, haben sich die Erfinder die Aufgabe gestellt, ein Projektionslichtmodul für einen Kraftfahrzeugscheinwerfer bereitzustellen, das bei nicht größerem Bauraumbedarf effizienter arbeitet als das bekannte Projektionslichtmodul.

Diese Aufgabe wird mit den Merkmalen des Anspruchs 1 gelöst. Von dem eingangs genannten, bekannten Projektionslichtmodul unterscheidet sich das erfindungsgemäße Projektionslichtmodul durch die kennzeichnenden Merkmale des Anspruchs 1. Diese sehen vor, dass jede Mikroblende eine Reflexionsfläche mit einem eingangslinsenseitigen Ende und einem ausgangslinsenseitigen Ende aufweist, wobei das ausgangslinsenseitige Ende in den Fokalbereich hineinragt und das eingangslinsenseitige Ende gegenüber einer optischen Achse des Mikroprojektors so geneigt angeordnet ist, dass die Reflexionsfläche mit von der Eingangslinse ausgehendem Licht der Lichtquelle beleuchtet wird und von der Reflexionsfläche reflektiertes Licht der Lichtquelle auf die Ausgangslinse fällt.

Eine bevorzugte Ausgestaltung zeichnet sich dadurch aus, dass eine zwischen dem eingangslinsenseitigen Ende und dem ausgangslinsenseitigen Ende liegende Wandstärke der Mikroblende zwischen 0,5 mm und 1,5 mm beträgt.

Bevorzugt ist auch, dass die Reflexionsfläche eine glatte Fläche ist.

Weiter ist bevorzugt, dass die Reflexionsfläche eine ebene Fläche ist.

Eine weitere bevorzugte Ausgestaltung zeichnet sich dadurch aus, dass die Reflexionsfläche mit einer optischen Achse des zugehörigen Mikroprojektors einen Winkel einschließt, der größer als Null Grad ist und der kleiner oder gleich 5 Grad ist.

Bevorzugt ist auch, dass die Reflexionsfläche eine spiegelnde Beschichtung aufweist.

Weiter ist bevorzugt, dass die Mikroblende zusätzlich zu der Reflexionsfläche eine weitere eingangslinsenseitige Grenzfläche aufweist.

Eine weitere bevorzugte Ausgestaltung zeichnet sich dadurch aus, dass die eingangslinsenseitige weitere Grenzfläche senkrecht zu einer optischen Achse des zugehörigen Mikroprojektors ausgerichtet ist und mit der Reflexionsfläche einen Winkel einschließt, der größer als 90 Grad ist und der kleiner oder gleich 95 Grad ist. Die Reflexionsfläche ist dann zum Beispiel eine schräg zur optischen Achse liegende Fläche.

Bevorzugt ist auch, dass die Reflexionsfläche rechtwinklig zu der eingangslinsenseitigen weiteren Grenzfläche liegt und die Mikroblende zur Eingangslinse hin gekippt angeordnet ist.

Weiter ist bevorzugt, dass die Abstände zwischen den Eingangslinsen und den Mikroblenden von Mikroprojektor zu Mikroprojektor gleich sind und dass die Abstände zwischen den Mikroblenden und den Ausgangslinsen von Mikroprojektor zu Mikroprojektor gleich sind.

Weiter ist bevorzugt, dass die Eingangslinsen und die Ausgangslinsen bikonvexe Linsen sind.

Eine weitere bevorzugte Ausgestaltung zeichnet sich dadurch aus, dass den Mikroblenden zugewandte lichtbrechende Flächen der Eingangslinsen und der Ausgangslinsen ebene Flächen sind.

Bevorzugt ist auch, dass die Mikroblenden bei einer bestimmungsgemäßen Verwendung des Projektionslichtmoduls um vertikal verlaufende Achsen herum geneigt sind.

Weitere Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Dabei bezeichnen gleiche Bezugszeichen in verschiedenen Figuren jeweils gleiche oder zumindest ihrer Funktion nach vergleichbare Elemente. Es zeigen, jeweils in schematischer Form:
- Figur 1: einen Kraftfahrzeugscheinwerfer mit einem Mikroprojektoren aufweisenden Projektionslichtmodul;
- Figur 2: ein Beispiel einer Anordnung von Mikroprojektoren eines Projektionslichtmoduls;
- Figur 3: einen einzelnen Mikroprojektor eines bekannten Projektionslichtmoduls;
- Figur 4: einen Mikroprojektor eines Ausführungsbeispiels eines erfindungsgemäßen Projektionslichtmoduls;
- Figur 5: einen Mikroprojektor eines weiteren Ausführungsbeispiels eines erfindungsgemäßen Projektionslichtmoduls;
- Figur 6: Mikroprojektoren eines Projektionslichtmoduls mit einer Ausgestaltung von Eingangslinsen und Ausgangslinsen;
- Figur 7: Mikroprojektoren eines Projektionslichtmoduls mit einer alternativen Ausgestaltung von Eingangslinsen und Ausgangslinsen;
- Figur 8: Mikroprojektoren eines Projektionslichtmoduls mit einer weiteren Ausgestaltung von Eingangslinsen und Ausgangslinsen; und
- Figur 9: eine Anordnung von blockweise zusammengefassten Mikroprojektoren.

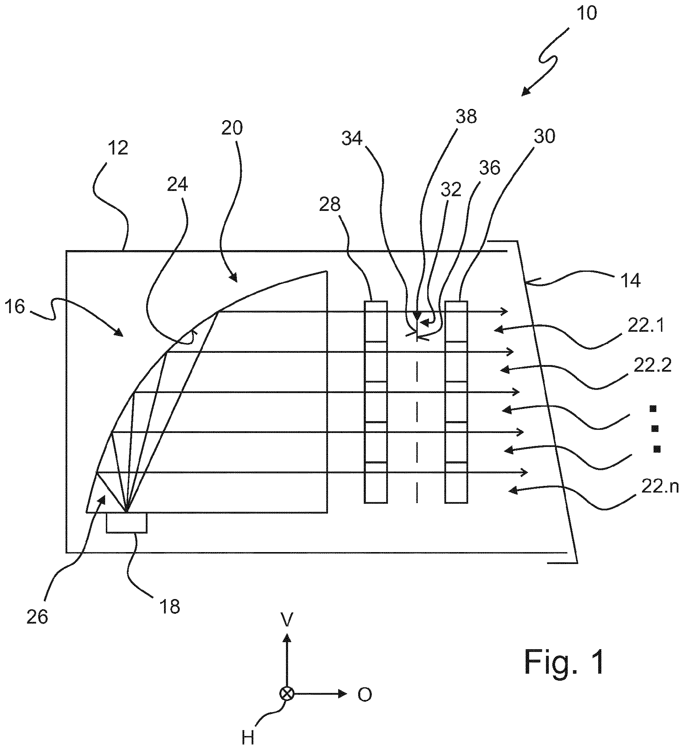

Im Einzelnen zeigt die Figur 1 einen Kraftfahrzeugscheinwerfer 10 mit einem Gehäuse 12, dass eine Lichtaustrittsöffnung aufweist, die von einer transparenten Abdeckscheibe 14 abgedeckt wird. Im Inneren des Gehäuses 12 befindet sich ein Projektionslichtmodul 16. Das Projektionslichtmodul 16 weist eine Lichtquelle 18, eine Primäroptik 20 und eine Mehrzahl von n Mikroprojektoren 22.1, 22.2, ... , 22.n auf.

Die Lichtquelle 18 ist zum Beispiel eine Halbleiterlichtquelle wie eine Leuchtdiode oder Laserdiode oder eine Gruppe solcher Halbleiterlichtquellen. Alternativ kann die Lichtquelle 18 auch eine Glühlampe oder eine Gasentladungslampe sein.

Die Primäroptik 20 ist im dargestellten Beispiel ein reflektierendes optisches Element in Form eines konkaven Hohlspiegelreflektors 24. Die Primäroptik 20 kann auch ein lichtbrechendes optisches Element wie eine Linse oder ein lichtbrechendes und reflektierendes katadioptrisches optisches Element sein oder aus mehreren optischen Elementen aufgebaut sein.

Die Primäroptik 20 ist in Bezug auf die Lichtquelle 18 so angeordnet, dass sie von der Lichtquelle 18 ausgehendes Licht 26 erfasst und auf die Mehrzahl von Mikroprojektoren 22.1, 22.2, ... , 22.n richtet. Jeder Mikroprojektor weist eine Eingangslinse 28, eine Ausgangslinse 30 und eine zwischen der Eingangslinse 28 und der Ausgangslinse 30 angeordnete Mikroblende 32 auf. Jede Mikroblende 32 weist eine der Eingangslinse 28 zugewandte erste Breitseite 34, eine der Ausgangslinse 30 zugewandte zweite Breitseite 36 und eine die erste Breitseite 34 und die zweite Breitseite 36 verbindende Schmalseite 38 auf. Die erste Breitseite 34 bildet eine eingangslinsenseitige Grenzfläche der Mikroblende.

In der Figur 1 ist rechts von dem Kraftfahrzeugscheinwerfer ein räumliches Koordinatensystem dargestellt, dass von der optischen Achse O des Kraftfahrzeugscheinwerfers 10, einer Horizontalen H und einer Vertikalen V definiert wird. Die Richtung der optischen Achse O ist die Hauptabstrahlrichtung des Projektionslichtmoduls 16. Die optischen Achsen der einzelnen Mikroprojektoren 22.1, 22.2, ... , 22.n sind zu der Hauptabstrahlrichtung parallel.

Im Inneren jedes Mikroprojektors 22.1, 22.2, ... , 22.n ergibt sich als Folge der durch die Lichtquelle 18 und die Primäroptik 20 erfolgenden Beleuchtung der Eingangslinsen 28 zwischen seiner Eingangslinse 28 und seiner Ausgangslinse 30 eine innere Lichtverteilung, die von der Ausgangslinse 30 als äußere Einzellichtverteilung in das Vorfeld des Projektionslichtmoduls 16 abgebildet wird. Bei einer bestimmungsgemäßen Verwendung des Kraftfahrzeugscheinwerfers 10 liegt das Vorfeld zum Beispiel auf der Fahrbahn vor dem Kraftfahrzeug.

Die Mikroblende 32 jedes Mikroprojektors 22.1, 22.2, ... , 22.n weist einen transparenten Teil und einen intransparenten Teil auf. Die transparenten Teile sind zum Beispiel als Ausnehmungen in einer Blendenfolie aus Metall verwirklicht. Die intransparenten Teile sind Teil der Blendenfolie. Licht 26 der Lichtquelle 18, das durch den transparenten Teil eines einzelnen Mikroprojektors hindurchtritt, wird in das Vorfeld abgestrahlt und erzeugt dort eine Einzellichtverteilung in Form eines Bildes der inneren Lichtverteilung. Licht 26 der Lichtquelle 18, das auf einem undurchsichtigen Teil der Folie fällt, wird dort absorbiert. Eine in die innere Lichtverteilung hineinragende Kante der Blendenfolie, beziehungsweise einer Ausnehmung der Blendenfolie erscheint in der äußeren Einzellichtverteilung als Hell-Dunkel-Grenze. Insgesamt ergibt sich eine äußere Gesamtlichtverteilung des Projektionslichtmoduls 16 dann als Ergebnis einer Überlagerung der von sämtlichen Mikroprojektoren erzeugten Einzellichtverteilungen im Vorfeld des Projektionslichtmoduls 16, da die Mikroprojektoren 22.1,22.2, ..., 22.n alle die gleiche Hauptabstrahlrichtung aufweisen. Auf einer senkrecht zur optischen Achse liegenden Schirmfläche liegen die Einzellichtverteilungen übereinander.

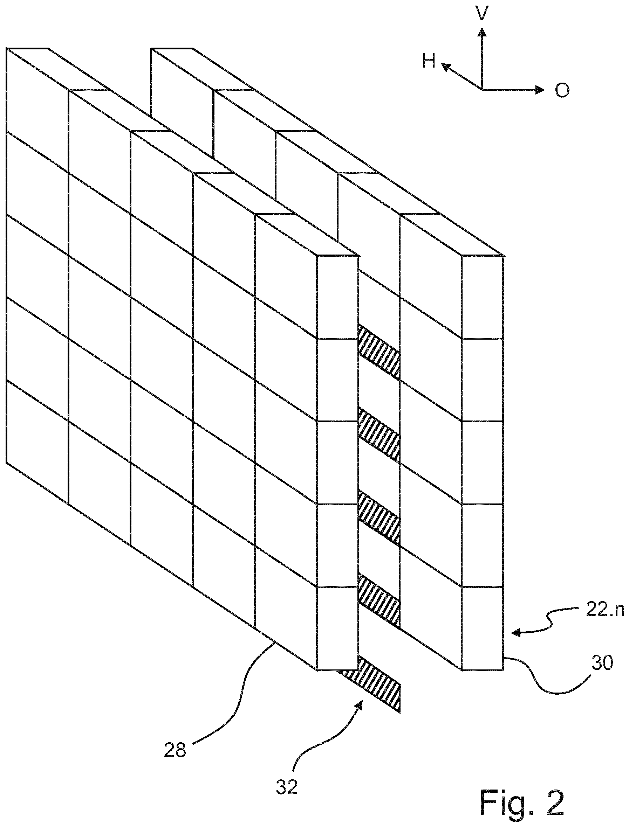

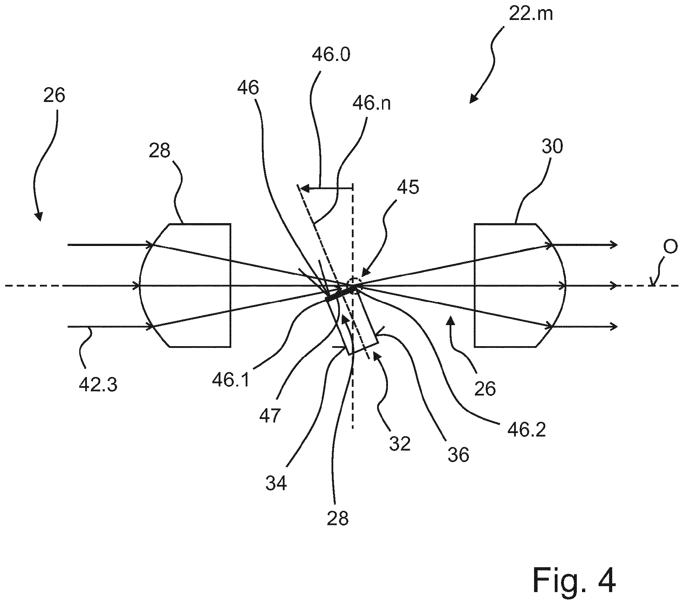

Figur 2 zeigt ein Beispiel einer Anordnung von Mikroprojektoren 22 eines Projektionslichtmoduls. Die einzelnen Mikroprojektoren sind dabei in Zeilen nebeneinander und in Spalten übereinander angeordnet. Die Zahl der Mikroprojektoren in einer Zeile kann für alle Zeilen gleich sein, wie es die Figur 2 zeigt. Voneinander verschiedene Zeilen können aber auch verschieden viele Mikroprojektoren aufweisen. Dies gilt analog für die Zahl der Mikroprojektoren in den Spalten. Die Zahl der Mikroprojektoren in einer Spalte kann für alle Spalten gleich sein, wie es die Figur 2 zeigt. Voneinander verschiedene Spalten können aber auch verschieden viele Mikroprojektoren aufweisen. Die einzelnen Mikroprojektoren 22 sind so aufgebaut, wie es oben unter Bezug auf die Figur 1 und weiter unten unter Bezug auf die Figuren 4 bis 9 erläutert wird.

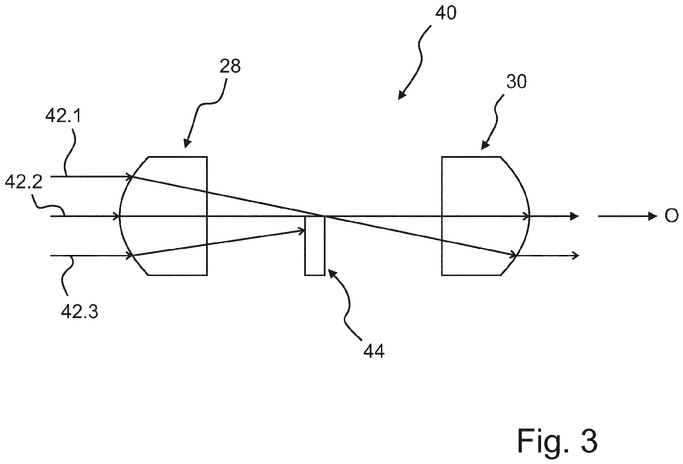

Figur 3 zeigt einen einzelnen Mikroprojektor 40 des bekannten Projektionslichtmoduls. Vereinfachend zeigt Figur 3 insbesondere drei Lichtstrahlen 42.1, 42.2, 42.3, die von der Primäroptik kommend auf die Eingangslinse 28 einfallen. Die beiden oberen Lichtstrahlen 42.1 und 42.2 passieren die Mikroblende 44 und werden von der Ausgangslinse 30 in das Vorfeld des Projektionslichtmoduls gerichtet, zu dem der Mikroprojektor 40 gehört. Der untere Strahl 42.3 trifft dagegen auf einen undurchsichtigen Teil der Mikroblende 44 auf. Dieser Strahl wird von der Mikroblende 44 absorbiert und geht daher für die zu erzeugende Gesamtlichtverteilung verloren. Die Mikroblende 44 ist hier ein Teil einer Ausnehmungen aufweisenden Blendenfolie aus Metall. Die Dicke (Wandstärke) der Blendenfolie beträgt bei den bekannten Mikroprojektoren zum Beispiel 1/10 mm.

Man ist bei Kraftfahrzeugscheinwerfern immer an einer guten Effizienz interessiert, weil eine schlechte Effizienz gegebenenfalls mit einer erhöhten Lichtleistung der Lichtquelle kompensiert werden muss. Unter der Effizienz wird hier der Anteil an der in die Lichtquelle investierten elektrischen Energie verstanden, der letztlich in Form von Licht zu der erwünschten Gesamtlichtverteilung beiträgt. Eine Vergrößerung der Lichtleistung erfordert eine Vergrößerung der elektrischen Energie und erfordert zum Beispiel größere und schwerere Kühlkörper für die Lichtquelle, was letztlich zu höheren Herstellungskosten und Betriebskosten führt.

Figur 4 zeigt einen Mikroprojektor 22.m stellvertretend für jeden der Mikroprojektoren 22.1, ... , 22.n aus der Figur 1. Figur 4 zeigt damit einen Mikroprojektor eines Ausführungsbeispiels eines erfindungsgemäßen Projektionslichtmoduls 16. Jeder Mikroprojektor 22.m weist jeweils eine Eingangslinse 28, eine Ausgangslinse 30 und eine zwischen der Eingangslinse 28 und der Ausgangslinse 30 angeordnete Mikroblende 32 auf. Die Eingangslinse 28 ist dazu eingerichtet, von der Primäroptik 20 aus Figur 1 her einfallendes Licht 26 der Lichtquelle 18 aus Figur 1 in einen zwischen der Eingangslinse 28 und der Ausgangslinse 30 liegenden Fokalbereich 45 zu bündeln. Diese Eigenschaft der Eingangslinse 28 wird durch die Geometrie der brechenden Flächen der Eingangslinse 28, die Brechzahl ihres Materials und ihre Anordnung auf der optischen Achse O erzielt. Die Ausgangslinse 30 ist in von dem Fokalbereich 45 ausgehenden Licht 26 der Lichtquelle 18 aus Figur 1 angeordnet.

Die Mikroblende 32 weist eine Reflexionsfläche 46 mit einem eingangslinsenseitigen Ende 46.1 und einem ausgangslinsenseitigen Ende 46.2 auf. Die Reflexionsfläche 46 liegt in der Schmalseite 38 aus Figur 1 oder ist mit dieser identisch. Das ausgangslinsenseitige Ende 46.2 ragt in den Fokalbereich 45 hinein. Das eingangslinsenseitige Ende 46.1 ist gegenüber der optischen Achse O des Mikroprojektors 22.m so geneigt angeordnet, dass die Reflexionsfläche 46 mit von der Eingangslinse 28 ausgehendem Licht 26 der Lichtquelle 18 aus der Figur 1 beleuchtet wird und von der Reflexionsfläche 46 reflektiertes Licht der Lichtquelle 18 auf die Ausgangslinse 30 fällt. Eine zwischen den Breitseiten 34 und 36 liegende Wandstärke der Mikroblende 32 beträgt zwischen 0,5 mm und 1,5 mm. Das eingangslinsenseitige Ende 46.1 liegt zwischen der eine Grenzfläche der Mikroblende 32 darstellenden Reflexionsfläche 46 und einer eingangslinsenseitigen weiteren Grenzfläche, die von der Breitseite 34 gebildet wird. Die erste Breitseite 34 bildet eine weitere eingangslinsenseitige Grenzfläche der Mikroblende.

Wie ein Vergleich der Figuren 3 und 4 zeigt, können dadurch Strahlen 42.3, die bei dem Mikroprojektor 40 nach der Figur 3 von der Mikroblende 44 absorbiert oder zurückreflektiert werden, noch auf die Reflexionsfläche 46 der Mikroblende 32 des Mikroprojektors 22.m aus der Figur 3 einfallen. Diese Lichtstrahlen 42.3 werden von der Reflexionsfläche 46 zur Ausgangslinse 30 reflektiert (als oberer der drei rechts von der Mikroblende 32 verlaufenden Strahlen) und von dieser in das Vorfeld des Projektionslichtmoduls 16 gerichtet. Als erwünschte Folge tragen diese Lichtstrahlen 42.3 bei dem erfindungsgemäßen Projektionslichtmodul 16 zur Erzeugung der Lichtverteilung im Vorfeld des Projektionslichtmoduls 16 bei.

Bei dem Mikroprojektor 22.m, der in der Figur 4 dargestellt ist, ist die dort mit der Schmalseite 38 der Mikroblende 32 identische Reflexionsfläche 46 nicht nur zur Eingangslinse 28 hin geneigt, sondern die zwischen der ersten Breitseite 34 und der zweiten Breitseite 36 liegende Wandstärke der Mikroblende 32 ist im Vergleich zu der etwa 1/10 mm messenden Wandstärke der Blendenfolie des bekannten Projektionslichtmoduls vergrößert. Die vergrößerte Wandstärke liegt bevorzugt zwischen 0,5 mm und 1,5 mm. Ausgehend von der 1/10 mm starkem Wandstärke der Blendenfolie des bekannten Projektionslichtmoduls entspricht dies einem Vergrößerungsfaktor von 5 bis 15. Der Maximalwert der Wandstärke kann insbesondere durch das verwendete Herstellungsverfahren begrenzt sein.

Die bei dem Mikroprojektor 22.m als Reflexionsfläche 46 dienende Schmalseite 38 ist bevorzugt als glatte Reflexionsfläche 46 verwirklicht, so dass die dort reflektierten Lichtstrahlen 42.3 zur Ausgangslinse 30 reflektiert werden. Um die Herstellung zu vereinfachen, ist die Reflexionsfläche 46 vorzugsweise eine ebene Fläche. Eine solche ebene Fläche kann zum Beispiel durch ein Laserschneidverfahren erzeugt werden.

Je weiter die Reflexionsfläche 46 zur Eingangslinse 28 hin geneigt ist, umso mehr Licht kann sie erfassen, was prinzipiell ein Vorteil ist. Andererseits besteht bei einer zu großen Neigung die Gefahr, dass an der Reflexionsfläche 46 reflektiertes Licht nicht mehr auf die Ausgangslinse 30 trifft.

Als günstiger Kompromiss hat sich herausgestellt, dass der kleinere der beiden Winkel, die eine Flächennormale 46.n der (ebenen) Reflexionsfläche 46 eines Mikroprojektors 22.m mit der optischen Achse O des Mikroprojektors 22.m einschließt, zwischen 85 Grad und 90 Grad beträgt, was damit gleichbedeutend ist, dass die Reflexionsfläche 46 selbst mit der optischen Achse O des zugehörigen Mikroprojektors 22.m einen Winkel w einschließt, der größer als Null Grad ist und der kleiner oder gleich 5 Grad ist. Der kleinere der beiden Winkel öffnet sich zur Eingangslinse 28 hin. Dies gilt bevorzugt wenigstens für eine Mehrzahl der Mikroprojektoren des Projektionslichtmoduls, es kann aber auch für alle Mikroprojektoren des Projektionslichtmoduls gelten. Eine solche Neigung geht damit einher, dass die Flächennormale 46.n eine parallel zur optischen Achse O verlaufende und zur Eingangslinse 28 hinweisende Komponente 46.0 aufweist. Die geneigte Reflexionsfläche 46 liegt jeweils rechtwinklig zu jeder der beiden Breitseiten 34, 36, und die Mikroblende 32 ist als Ganzes zur Eingangslinse 28 hin gekippt.

Um die Effizienz weiter zu verbessern, weist die Reflexionsfläche 46 bevorzugt eine spiegelnde Beschichtung 47 auf, wie sie zum Beispiel durch ein Bedampfen der Reflexionsfläche 46 mit Metall erzeugt wird. Spiegelnde Reflexionen, die an der der Eingangslinse 28 zugewandten Breitseite 34 auftreten, können als gewissermaßen ungeordnet vagabundierendes, undefiniertes Streulicht störende Lichteffekte erzeugen. Um dies zu verhindern, wird die erste Breitseite 34 beim Beschichten der Reflexionsfläche 46 vorzugsweise abgedeckt, sodass sie im Ergebnis keine spiegelnde Beschichtung aufweist.

Bevorzugt ist auch, dass eine Summe der Breiten von nebeneinander angeordneten Mikroprojektoren eines Projektionslichtmoduls kleiner als 30 mm ist und dass eine Summe der Höhen übereinander angeordneter Mikroprojektoren eines Projektionslichtmoduls kleiner als 30 mm ist. Die Breite erstreckt sich dabei bei einer bestimmungsgemäßen Verwendung in horizontaler Richtung und senkrecht zu optischen Achse O. Die Höhe erstreckt sich dabei bei einer bestimmungsgemäßen Verwendung in vertikaler Richtung und senkrecht zu optischen Achse O.

Eine weitere bevorzugte Ausgestaltung zeichnet sich dadurch aus, dass die Breiten der Mikroprojektoren (jeweils einzeln) kleiner als 6 mm sind, die Höhen der Mikroprojektoren (jeweils einzeln) kleiner als 4 mm sind und die Tiefe jeweils einer Linse der Mikroprojektoren kleiner als 6 mm ist. Die Tiefe erstreckt sich dabei in Richtung der optischen Achse. Auch hier gilt, dass sich die Breite bei bestimmungsgemäßer Verwendung in horizontaler Richtung und senkrecht zur optischen Achse erstreckt, und dass sich die Höhe bei bestimmungsgemäßer Verwendung in vertikaler Richtung und senkrecht zur optischen Achse erstreckt.

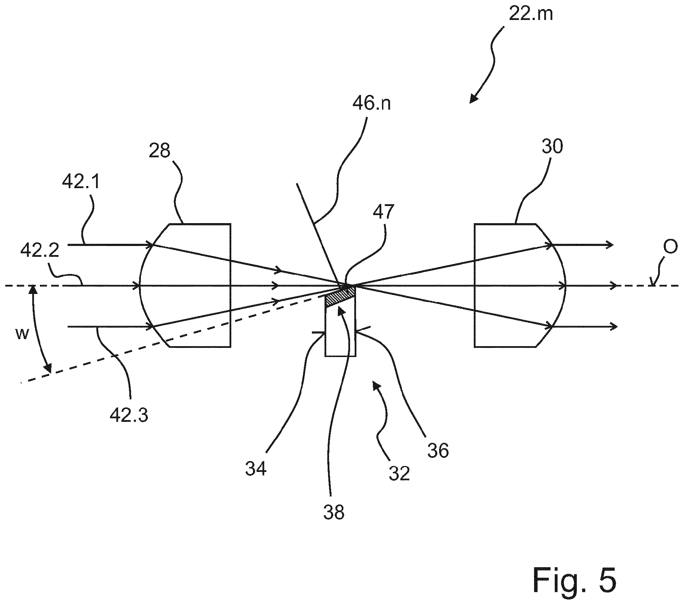

Figur 5 zeigt einen Schnitt durch einen Mikroprojektor 22.m, dessen Mikroblende 32 im Mikroprojektor 22.m so angeordnet ist, dass die Breitseiten 34 und 36 senkrecht zur optischen Achse O angeordnet sind. Eine Neigung der Schmalseite 38 (und der mit der Schmalseite identischen Reflexionsfläche 46) zur Eingangslinse 28 hin ergibt sich beim Gegenstand der Figur 5 durch einen schrägen Anschnitt der Mikroblende 32. Der schräge Anschnitt erfolgt so, dass sich die gewünschte Neigung der Flächennormalen 46.n und damit der Reflexionsfläche 46 ergibt. Bei der Richtungsfestlegung nach Figur 5 kann der schräge Anschnitt durch einen entsprechend schräggestellten Laserstrahl erzeugt werden. Die Reflexionsfläche 46 schließt in der Zeichnungsebene einen Winkel w mit der optischen Achse O ein, der größer als Null Grad und kleiner als 5 Grad ist, was einem Winkel zwischen der Flächennormalen 46.n und der optischen Achse O entspricht, der kleiner als 90 Grad und größer als 85 Grad ist. Dieser Winkel öffnet sich zur Eingangslinse 28 hin.

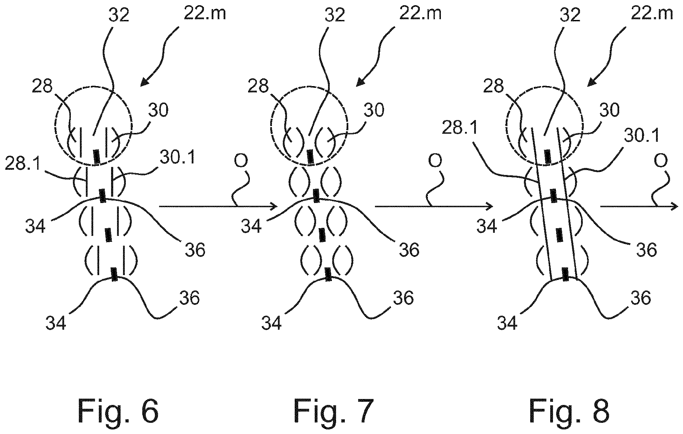

Die Figur 6, 7 und 8 zeigen Ausführungsbeispiele von Anordnungen von Mikroprojektoren 22.m erfindungsgemäßer Projektionslichtmodule. Die einzelnen Mikroprojektoren 22.m weisen dabei jeweils eine Eingangslinse 28, eine Mikroblende 32 und eine Ausgangslinse 30 auf, die jeweils in dieser Reihenfolge längs einer optischen Achse O angeordnet sind.

Die Gegenstände der Figuren 6, 7 und 8 haben gemeinsam, dass die ersten Breitseiten 34 der Mikroblenden 32 in einer Flucht liegen und dass die zweiten Breitseiten 36 ebenfalls in einer Flucht liegen.

Außerdem gilt für diese Mikroprojektoren 22.m in Bezug auf jeweils eine der Figuren 6, 7, und 8, dass die Abstände zwischen den Eingangslinsen 28 und den Mikroblenden 32 von Mikroprojektor zu Mikroprojektor gleich sind und dass die Abstände zwischen den Mikroblenden 32 und den Ausgangslinsen 30 von Mikroprojektor 22.m zu Mikroprojektor gleich sind. Als erwünschte Folge unterscheiden sich die Abbildungseigenschaften der Mikroprojektoren 22.m jeweils einer der Figuren 6,7, und 8 nicht voneinander.

Bei Gegenstand der Figur 6 sind die den Mikroblenden 32 zugewandten, lichtbrechenden Flächen 28.1 der Eingangslinsen 28 und die den Mikroblenden 32 zugewandten, lichtbrechenden Flächen 30.1 der Ausgangslinsen 30 ebene Flächen. Die Eingangslinsen 28 und die Ausgangslinsen 30 sind dabei plan-konvexe Linsen. Jeweils zwei einander benachbarte Eingangslinsen 28 sind zueinander längs der optischen Achse versetzt angeordnet, so dass sich zwischen ihnen eine Stufe ergibt. Analog sind jeweils zwei einander benachbarte Ausgangslinsen zueinander längs der optischen Achse versetzt angeordnet, so dass sich zwischen ihnen eine Stufe ergibt. Die Stufe ergibt sich insbesondere zwischen den der Mikroblende 32 zugewandten lichtbrechenden Flächen 28.1 einander benachbarter Eingangslinsen 28 und zwischen den der Mikroblende 32 zugewandten lichtbrechenden Flächen 30.1 einander benachbarter Ausgangslinsen 30.

Beim Gegenstand der Figur 7 sind die Eingangslinsen 28 und die Ausgangslinsen 30 bikonvexe Linsen. Im Vergleich mit dem Gegenstand der Figur 6 werden dadurch parallel zur optischen Achse O liegende Stufen zwischen einander benachbarten lichtbrechenden Flächen der Eingangslinsen 28 vermieden, und es werden ebenfalls parallel zur optischen Achse O liegende Stufen zwischen einander benachbarten lichtbrechenden Flächen der Ausgangslinsen 30 vermieden. Dadurch kann ein Ensemble von Linsen, dass als einstückiges Linsenarray durch Kunststoffspritzguss hergestellt wird, leichter aus der Spritzgussform herausgelöst werden. Dies gilt sowohl für die Array aus Eingangslinsen 28 als auch für ein Array aus Ausgangslinsen 30.

Beim Gegenstand der Figur 8 sind die Eingangslinsen 28 Bestandteile eines einstückigen Eingangslinsenarrays, und die Ausgangslinsen 30 sind jeweils Bestandteile eines weiteren einstückigen Ausgangslinsenarrays. Sowohl für das Eingangslinsenarray als auch für das Ausgangslinsenarray gilt, dass die den Mikroblenden 32 zugewandte lichtbrechende Fläche 28.1, 30.1 des jeweiligen Linsenarrays jeweils als durchgehend ebene Flächen verwirklicht ist. Die der ebenen Fläche jeweils gegenüberliegende gewölbte Fläche jeder Eingangslinse 28 und jeder Ausgangslinse 30 ist dann asymmetrisch geformt, um die gewünschte Fokussierung auf die in der Schmalseite 38 der zugehörigen Mikroblende 32 liegende Reflexionsfläche zu gewährleisten.

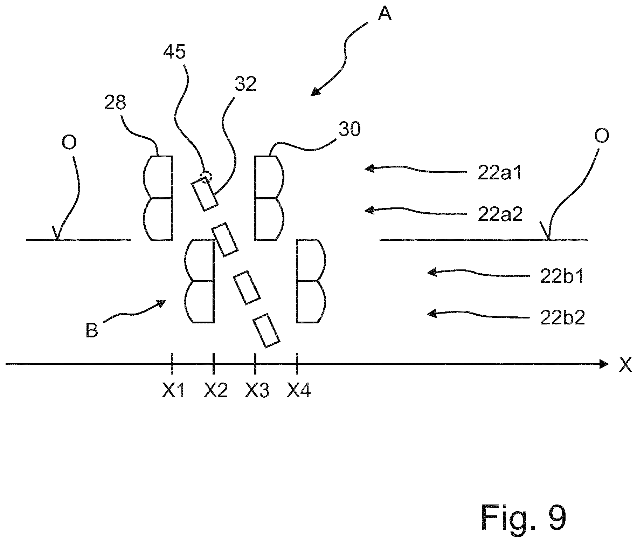

Figur 9 zeigt eine Anordnung von vier Mikroprojektoren 22a1, 22a2, 22b1, 22b2, von denen zwei Mikroprojektoren 22a1, 22a2 zu einem Block A zusammengefasst und von denen zwei Mikroprojektoren 22b1, 22b2 zu einem Block B zusammengefasst sind. Jeder Block A, B zeichnet sich dadurch aus, dass die Eingangslinsen seiner Mikroprojektoren in Richtung der optischen Achse O am gleichen Ort angeordnet sind und dass die Ausgangslinsen seiner Mikroprojektoren in Richtung der optischen Achse am gleichen Ort angeordnet sind. Die Eingangslinsen des ersten Blocks sind am Ort x1 angeordnet. Die Eingangslinsen des zweiten Blocks sind am Ort x2 angeordnet. Die Ausgangslinsen des ersten Blocks sind am Ort x3 angeordnet. Die Ausgangslinsen des zweiten Blocks sind am Ort x4 angeordnet. Die Blöcke A, B sind damit längs der Richtung der optischen Achse O gestaffelt, das heißt, zueinander versetzt angeordnet.

Die beiden Blöcke A, B sind so versetzt zueinander angeordnet, dass ein mittlerer Abstand der Eingangslinsen eines Blockes von ihrer jeweils zugehörigen Mikroblende 32 gleich dem mittleren Abstand der Eingangslinsen des anderen Blockes von deren jeweils zugehöriger Mikroblende 32 ist.

Die Eingangslinsen jeweils eines Blockes weisen unterschiedliche Brennweiten auf. Eine Eingangslinse eines Blockes, die einen größeren Abstand von ihrer zugehörigen Mikroblende aufweist als eine andere Eingangslinse desselben Blockes von deren zugehöriger Mikroblende, besitzt eine größere Brennweite als die andere Eingangslinse. Das heißt, dass zum Beispiel die in der Figur 9 untere Eingangslinse eine größere Brennweite besitzt als die in der Figur 9 obere Eingangslinse.

Analog dazu weisen auch die Ausgangslinsen jeweils eines Blockes unterschiedliche Brennweiten auf. Eine Ausgangslinse eines Blockes, die einen größeren Abstand von ihrer zugehörigen Mikroblende aufweist als eine andere Ausgangslinse desselben Blockes von deren zugehöriger Mikroblende, besitzt eine größere Brennweite als die andere Ausgangslinse.

Die Brennweiten sind jeweils so auf die Abstände abgestimmt, dass die Eingangslinse von jedem Mikroprojektor Licht der Lichtquelle in denselben Fokalbereich 45 bündelt, der von der Ausgangslinse desselben Mikroprojektors in das Vorfeld des Projektionslichtmoduls abgebildet wird, wobei die Reflexionsfläche der zugehörigen Mikroblende in diesen Fokalbereich hineinragt.

Figur 9 zeigt damit ein Projektionslichtmodul, das Mikroprojektoren aufweist, die bei einer bestimmungsgemäßen Verwendung jeweils paarweise übereinander angeordnet sind und wobei die übereinander angeordneten Mikroprojektoren in einer Richtung der optischen Achse der Mikroprojektoren versetzt zueinander angeordnet sind. Dabei weist das Projektionslichtmodul erste Mikroprojektoren und zweite Mikroprojektoren auf, die sich darin unterscheiden, dass ein Abstand zwischen der Eingangslinse und der Mikroblende der ersten Mikroprojektoren größer ist als ein Abstand zwischen der Eingangslinse und der Mikroblende der zweiten Mikroprojektoren und dass die Brennweiten der Eingangslinsen der ersten Mikroprojektoren größer als die Brennweiten der zweiten Mikroprojektoren sind. Soweit wie bisher beschrieben, ging es um Ausführungsbeispiele, bei denen eine Schmalseite der Mikroblenden um eine bei bestimmungsgemäßer Verwendung horizontal verlaufende (mikroblendenindividuelle) Achse herum geneigt ist. Es versteht sich aber, dass die Erfindung auch mit einem Projektionslichtmodul realisierbar ist, dass eine bei bestimmungsgemäßer Verwendung vertikal verlaufende Hell-Dunkel-Grenze erzeugt. In diesem Fall sind die Mikroblenden, beziehungsweise die Schmalseiten der Mikroblenden, um eine vertikal verlaufende (mikroblendenindividuelle) Achse herum geneigt. Dies entspricht den Figuren der Anmeldung, wenn man dort jeweils die Richtungen H und V miteinander vertauscht.

Bei einem Projektionslichtmodul, das eine bei bestimmungsgemäßer Verwendung des Projektionslichtmoduls vertikale Hell-Dunkel-Grenze und eine weitere, horizontale Hell-Dunkel-Grenze erzeugt, sind die Mikroblenden um eine bei der bestimmungsgemäßen Verwendung vertikal verlaufende (mikroblendenindividuelle) Achse herum geneigt und um eine bei der bestimmungsgemäßen Verwendung horizontal verlaufende (mikroblendenindividuelle) Achse herum geneigt angeordnet. Die Eingangslinsen und die Ausgangslinsen sind dann entsprechend der Neigung der Reflexionsflächen in Richtung der optischen Achse diagonal gestaffelt angeordnet. Die Zahl der Mikroprojektoren pro Block ist nicht auf 2 festgelegt. Bevorzugt liegt diese Zahl zwischen 2 und 10, einschließlich dieser Grenzen. Die Zahl der Mikroprojektoren pro Block kann dabei innerhalb eines mehrere solcher Blöcke aufweisenden Projektionslichtmoduls von Block zu Block verschieden sein.

## Patentansprüche

1. Projektionslichtmodul (16) für einen Kraftfahrzeugscheinwerfer (10), welches Projektionslichtmodul (16) eine Lichtquelle (18), eine Licht (26)der Lichtquelle (18) sammelnde Primäroptik (20) und eine Mehrzahl von Mikroprojektoren (22.1, 22.2, ... , 22.n) aufweist, von denen jeder jeweils eine Eingangslinse (28), eine Ausgangslinse (30) und eine zwischen der Eingangslinse (28) und der Ausgangslinse (30) angeordnete Mikroblende (32) aufweist, wobei die Eingangslinse (28) dazu eingerichtet ist, von der Primäroptik (20) her einfallendes Licht (26) der Lichtquelle (18) in einen zwischen der Eingangslinse (28) und der Ausgangslinse (30) liegenden Fokalbereich (45) zu bündeln und wobei die Ausgangslinse (30) in von dem Fokalbereich (45) ausgehendem Licht (26) der Lichtquelle (18) angeordnet ist, **dadurch gekennzeichnet, dass** jede Mikroblende (32) eine Reflexionsfläche (46) mit einem eingangslinsenseitigen Ende (46.1) und einem ausgangslinsenseitigen Ende (46.2) aufweist, wobei das ausgangslinsenseitige Ende (46.2) in den Fokalbereich (45) hineinragt und das eingangslinsenseitige Ende (46.1) gegenüber einer optischen Achse (O) des Mikroprojektors (22.1, 22.2, ... , 22.n) so geneigt angeordnet ist, dass die Reflexionsfläche (46) mit von der Eingangslinse (28) ausgehendem Licht (26) der Lichtquelle (18) beleuchtet wird und von der Reflexionsfläche (46) reflektiertes Licht (26) der Lichtquelle (18) auf die Ausgangslinse (30) fällt.

2. Projektionslichtmodul (16) nach Anspruch 1, **dadurch gekennzeichnet, dass** eine zwischen dem eingangslinsenseitigen Ende (46.1) und dem ausgangslinsenseitigen Ende (46.2) liegende Wandstärke der Mikroblende (32) zwischen 0,5 mm und 1,5 mm beträgt.

3. Projektionslichtmodul (16) nach Anspruch 1 oder 2, **dadurch gekennzeichnet, dass** die Reflexionsfläche (46) eine glatte Fläche ist.

4. Projektionslichtmodul (16) nach Anspruch 3, **dadurch gekennzeichnet, dass** die Reflexionsfläche (46) eine ebene Fläche ist.

5. Projektionslichtmodul (16) nach Anspruch 4, **dadurch gekennzeichnet, dass** die Reflexionsfläche (46) mit einer optischen Achse (O) des zugehörigen Mikroprojektors einen Winkel (w) einschließt, der größer als Null Grad ist und der kleiner oder gleich 5 Grad ist.

6. Projektionslichtmodul (16) nach einem der Ansprüche 3 bis 5, **dadurch gekennzeichnet, dass** die Reflexionsfläche (46) eine spiegelnde Beschichtung (47) aufweist.

7. Projektionslichtmodul (16) nach Anspruch 6, **dadurch gekennzeichnet, dass** die Mikroblende (32) zusätzlich zu der Reflexionsfläche (46) eine weitere eingangslinsenseitige Grenzfläche aufweist.

8. Projektionslichtmodul (16) nach Anspruch 7, **dadurch gekennzeichnet, dass** die eingangslinsenseitige weitere Grenzfläche senkrecht zu einer optischen Achse (O) des zugehörigen Mikroprojektors (22.1, 22.2, ... , 22.n) ausgerichtet ist und mit der Reflexionsfläche (46) einen Winkel einschließt, der größer als 90 Grad ist und der kleiner oder gleich 95 Grad ist.

9. Projektionslichtmodul (16) nach Anspruch 7, **dadurch gekennzeichnet, dass** die Reflexionsfläche (46) rechtwinklig zu der eingangslinsenseitigen weiteren Grenzfläche liegt und die Mikroblende (32)zur Eingangslinse (28) hin gekippt angeordnet ist.

10. Projektionslichtmodul (16) nach einem der vorhergehenden Ansprüche, **dadurch gekennzeichnet, dass** die Abstände zwischen den Eingangslinsen (28) und den Mikroblenden (32) von Mikroprojektor zu Mikroprojektor gleich sind und dass die Abstände zwischen den Mikroblenden (32) und den Ausgangslinsen (30) von Mikroprojektor zu Mikroprojektor gleich sind.

11. Projektionslichtmodul (16) nach einem der vorhergehenden Ansprüche, **dadurch gekennzeichnet, dass** die Eingangslinsen (28)und die Ausgangslinsen (30) bikonvexe Linsen sind.

12. Projektionslichtmodul (16) nach einem der Ansprüche 1 - 10, **dadurch gekennzeichnet, dass** den Mikroblenden (32) zugewandte lichtbrechende Flächen der Eingangslinsen und der Ausgangslinsen ebene Flächen sind.

13. Projektionslichtmodul (16) nach einem der vorhergehenden Ansprüche, **dadurch gekennzeichnet, dass** die Mikroblenden (32) bei einer bestimmungsgemäßen Verwendung des Projektionslichtmoduls (16) um vertikal verlaufende Achsen herum geneigt sind.

14. Projektionslichtmodul nach einem der vorhergehenden Ansprüche, **dadurch gekennzeichnet, dass** das Projektionslichtmodul Mikroprojektoren aufweist, die bei einer bestimmungsgemäßen Verwendung jeweils paarweise übereinander angeordnet sind und dass die übereinander angeordneten Mikroprojektoren in einer Richtung der optischen Achse der Mikroprojektoren versetzt zueinander angeordnet sind.

15. Projektionslichtmodul nach Anspruch 11, **dadurch gekennzeichnet, dass** das Projektionslichtmodul erste Mikroprojektoren und zweite Mikroprojektoren aufweist, die sich darin unterscheiden, dass ein Abstand zwischen der Eingangslinse und der Mikroblende der ersten Mikroprojektoren größer ist als ein Abstand zwischen der Eingangslinse und der Mikroblende der zweiten Mikroprojektoren und dass die Brennweiten der Eingangslinsen der ersten Mikroprojektoren größer als die Brennweiten der Eingangslinsen der zweiten Mikroprojektoren sind.

## Claims

1. Projection light module (16) for a motor vehicle headlamp (10), which projection light module (16) comprises a light source (18), a primary optics (20) collecting light (26) from the light source (18) and a plurality of micro-projectors (22.1, 22.2, ..., 22. n), each of which comprises a respective input lens (28), an output lens (30) and a microshield (32) arranged between the input lens (28) and the output lens (30), the input lens (28) being adapted to bundle light (26) of the light source (18) incident from the primary optics (20) into a focal region (45) lying between the input lens (28) and the output lens (30) and wherein the output lens (30) is arranged in light (26) of the light source (18) emanating from the focal region (45), **characterised in that** each microshield (32) has a reflecting surface (46) with an input-lens-side end (46. 1) and an output-lens-side end (46.2), the output-lens end (46.2) protruding into the focal region (45) and the input-lens side-end (46.1) being arranged inclined opposite an optical axis (O) of the microprojector (22.1, 22.2, ..., 22. n) such that the reflecting surface (46) is illuminated with light (26) from the light source (18) emanating from the input lens (28) and light (26) from the light source (18) reflected by the reflecting surface (46) falls on the output lens (30).

2. Projection light module (16) according to claim 1, **characterised in that** a wall thickness of the microshield (32) lying between the input-lens end (46.1) and the output-lens end (46.2) is between 0.5 mm and 1.5 mm.

3. Projection light module (16) according to claim 1 or 2, **characterised in that** the reflecting surface (46) is a smooth surface.

4. Projection light module (16) according to claim 3, **characterized in that** the reflecting surface (46) is a flat surface.

5. Projection light module (16) according to claim 4, **characterized in that** the reflecting surface (46) forms an angle (w) with an optical axis (O) of the associated microprojector which is greater than zero degrees and which is less than or equal to 5 degrees.

6. Projection light module (16) according to one of claims 3 to 5, **characterized in that** the reflection surface (46) has a reflective coating (47).

7. Projection light module (16) according to claim 6, **characterised in that** the microshield (32) has a further boundary surface on the input lens side in addition to the reflection surface (46).

8. Projection light module (16) according to claim 7, **characterized in that** the further boundary surface on the input lens side is aligned perpendicularly to an optical axis (O) of the associated microprojector (22.1, 22.2, ..., 22.n) and encloses with the reflection surface (46) an angle which is greater than 90 degrees and which is less than or equal to 95 degrees.

9. Projection light module (16) according to claim 7, **characterised in that** the reflection surface (46) lies at right angles to the further boundary surface on the input lens side and the microshield (32) is arranged tilted towards the input lens (28).

10. Projection light module (16) according to one of the preceding claims, **characterised in that** the distances between the input lenses (28) and the microshield (32) are the same from micro-projector to micro-projector and that the distances between the microshields (32) and the output lenses (30) are the same from micro-projector to micro-projector.

11. Projection light module (16) according to any of the preceding claims, **characterized in that** the input lenses (28) and the output lenses (30) are biconvex lenses.

12. Projection light module (16) according to one of the claims 1 - 10, **characterized in that** the refractive surfaces of the input lenses and the output lenses facing the microshields (32) are plane surfaces.

13. Projection light module (16) according to one of the preceding claims, **characterised in that** the microshield diaphragms (32) are inclined about vertically extending axes when the projection light module (16) is used as intended.

14. Projection light module according to one of the preceding claims, **characterised in that** the projection light module comprises micro-projectors which, when used as intended, are arranged in pairs one above the other and that the micro-projectors arranged one above the other are offset relative to one another in a direction of the optical axis of the micro-projectors.

15. Projection light module according to claim 11, **characterized in that** the projection light module comprises first microprojectors and second microprojectors, which differ **in that** a distance between the input lens and the microshield of the first microprojectors is greater than a distance between the input lens and the microshield of the second microprojectors and **in that** the focal lengths of the input lenses of the first microprojectors are greater than the focal lengths of the input lenses of the second microprojectors.

## Revendications

1. Module lumineux de projection (16) pour un projecteur de véhicule à moteur (10), lequel module lumineux de projection (16) présente une source de lumière (18), une optique primaire (20) collectant la lumière (26) de la source de lumière (18) et une pluralité de micro-projecteurs (22.1, 22.2, ..., 22.n), dont chacun présente respectivement une lentille d'entrée (28), une lentille de sortie (30) et un micro-diaphragme (32) disposé entre la lentille d'entrée (28) et la lentille de sortie (30), dans lequel la lentille d'entrée (28) est conçue pour focaliser la lumière (26), incidente à partir de l'optique primaire (20), de la source de lumière (18) dans une zone focale (45) située entre la lentille d'entrée (28) et la lentille de sortie (30) et dans lequel la lentille de sortie (30) est disposée dans la lumière (26), sortant de la zone focale (45), de la source de lumière (18), **caractérisé en ce que** chaque micro-diaphragme (32) présente une surface réfléchissante (46) avec une extrémité côté lentille d'entrée (46.1) et une extrémité côté lentille de sortie (46.2), dans lequel l'extrémité côté lentille de sortie (46.2) fait saillie dans la zone focale (45) et l'extrémité côté lentille d'entrée (46.1) est disposée de manière inclinée par rapport à un axe optique (O) du micro-projecteur (22.1, 22.2, ..., 22.n), de sorte que la surface réfléchissante (46) est éclairée avec la lumière (26), sortant de la lentille d'entrée (28), de la source de lumière (18) et la lumière (26), réfléchie par la surface réfléchissante (46), de la source de lumière (18) est incidente sur la lentille de sortie (30).

2. Module lumineux de projection (16) selon la revendication 1, **caractérisé en ce qu'**une épaisseur de paroi du micro-diaphragme (32) située entre l'extrémité côté lentille d'entrée (46.1) et l'extrémité côté lentille de sortie (46.2) est comprise entre 0,5 mm et 1,5 mm.

3. Module lumineux de projection (16) selon la revendication 1 ou 2, **caractérisé en ce que** la surface réfléchissante (46) est une surface lisse.

4. Module lumineux de projection (16) selon la revendication 3, **caractérisé en ce que** la surface réfléchissante (46) est une surface plane.

5. Module lumineux de projection (16) selon la revendication 4, **caractérisé en ce que** la surface réfléchissante (46) forme avec un axe optique (O) du micro-projecteur associé un angle (w) qui est supérieur à zéro degré et qui est inférieur ou égal à 5 degrés.

6. Module lumineux de projection (16) selon l'une quelconque des revendications précédentes 3 à 5, **caractérisé en ce que** la surface réfléchissante (46) présente un revêtement réfléchissant (47).

7. Module lumineux de projection (16) selon la revendication 6, **caractérisé en ce que** le micro-diaphragme (32) présente en plus de la surface réfléchissante (46) une autre surface limite côté lentille d'entrée.

8. Module lumineux de projection (16) selon la revendication 7, **caractérisé en ce que** l'autre surface limite côté lentille d'entrée est orientée perpendiculairement à un axe optique (O) du micro-projecteur (22.1, 22.2, ..., 22.n) associé et forme avec la surface réfléchissante (46) un angle qui est supérieur à 90 degrés et qui est inférieur ou égal à 95 degrés.

9. Module lumineux de projection (16) selon la revendication 7, **caractérisé en ce que** la surface réfléchissante (46) se situe à angle droit par rapport à l'autre surface limite côté lentille d'entrée et le micro-diaphragme (32) est disposé de manière basculée en direction de la lentille d'entrée (28).

10. Module lumineux de projection (16) selon l'une quelconque des revendications précédentes, **caractérisé en ce que** les écarts entre les lentilles d'entrée (28) et les micro-diaphragmes (32) sont identiques de micro-projecteur à micro-projecteur et que les écarts entre les micro-diaphragmes (32) et les lentilles de sortie (30) sont identiques de micro-projecteur à micro-projecteur.

11. Module lumineux de projection (16) selon l'une quelconque des revendications précédentes, **caractérisé en ce que** les lentilles d'entrée (28) et les lentilles de sortie (30) sont des lentilles biconvexes.

12. Module lumineux de projection (16) selon l'une quelconque des revendications 1 à 10, **caractérisé en ce que** les surfaces réfringentes, tournées vers les micro-diaphragmes (32), des lentilles d'entrée et des lentilles de sortie sont des surfaces planes.

13. Module lumineux de projection (16) selon l'une quelconque des revendications précédentes, **caractérisé en ce que** les micro-diaphragmes (32), lors d'une utilisation conforme à l'usage prévu du module lumineux de projection (16), sont inclinés autour d'axes s'étendant verticalement.

14. Module lumineux de projection selon l'une quelconque des revendications précédentes, **caractérisé en ce que** le module lumineux de projection présente des micro-projecteurs qui, lors d'une utilisation conforme à l'usage prévu, sont disposés les uns au-dessus des autres respectivement par paires et que les micro-projecteurs disposés les uns au-dessus des autres sont disposés de manière décalée les uns des autres dans une direction de l'axe optique des micro-projecteurs.

15. Module lumineux de projection selon la revendication 11, **caractérisé en ce que** le module lumineux de projection présente des premiers micro-projecteurs et deuxièmes micro-projecteurs qui se différencient les uns des autres **en ce qu'**un écart entre la lentille d'entrée et le micro-diaphragme des premiers micro-projecteurs est supérieur à un écart entre la lentille d'entrée et le micro-diaphragme des deuxièmes micro-projecteurs et que les distances focales des lentilles d'entrée des premiers micro-projecteurs sont supérieures aux distances focales des lentilles d'entrée des deuxièmes micro-projecteurs.
